# EUROPÄISCHE PATENTANMELDUNG

(11) **EP 4 322 471 A1**
(43) Veröffentlichungstag der Anmeldung: **14.02.2024**
(21) Anmeldenummer: 22189199.7
(22) Anmeldetag: 08.08.2022
(51) Int. Cl.: H04L 9/40, G06F 21/16, G06F 21/44

(54) **VERFAHREN ZUM IDENTITÄTSABGLEICH VON ÜBERTRAGENEN DATEN INNERHALB EINES PUBLISH-SUBSCRIBE BASIERTEN KOMMUNIKATIONSNETZES**

(71) Anmelder: Siemens Aktiengesellschaft, 80333 München (DE)
(72) Erfinder: Hohl, Hubertus, 79219 Staufen (DE); Sauer, Markus, 81739 München (DE)
(74) Vertreter: Siemens Patent Attorneys

(57) **Zusammenfassung**

Die Erfindung beansprucht ein computer-implementiertes Verfahren zum Identitätsabgleich von übertragenen Daten innerhalb eines Publish-Subscribe basierten Kommunikationsnetzes (CN) von mindestens einer Datenbereitstellungskomponente (AG2) zu mindestens einer Datenkonsumkomponente (AG1) des Kommunikationsnetzwerkes, wobei die genannten Datenkomponenten zumindest einen Teil eines mehrere Datenkomponenten umfassenden System bilden, aufweisend folgende Schritte:
- Bereitstellen wenigstens eines systemweiten Geheimnisses (OTP) sowie einer Zuweisungsvorschrift an alle im System authentifizierten und gegebenenfalls autorisierten Datenkomponenten (Sys1, Sys2), mit Hilfe derer für jede Datenkomponente des Systems eine die Datenkomponente identifizierende Identifikationsinformation (Sub-OTP) ableitbar ist,
- Bereitstellen von zu übertragenden Daten für eine ein Abonnement begründende Kommunikation zwischen den genannten Datenkomponenten, wobei die Daten zumindest eine von der Datenbereitstellungskomponente erzeugte Identifikationsinformation umfasst, welche aus einem der wenigstens einen systemweiten Geheimnisse und der Zuweisungsvorschrift abgeleitet wird und damit die Datenbereitstellungskomponente identifiziert,
- Übertragen der bereitgestellten Daten an die mindestens eine Datenkonsumkomponente, welche nach deren Empfang die erzeugte und übertragende Identifikationsinformation mit einer entsprechend abgeleiteten Identifikationsinformation abgleicht, welche die Datenkonsumkomponente aus dem bereitgestellten systemweiten Geheimnis und der bereitgestellten Zuweisungsvorschrift ableitet,
- Einleiten einer der Übertragung entgegenwirkbaren Maßnahme, wenn das Abgleichergebnis aus einem vorgebbaren Rahmen einer zulässigen Abweichung fällt.

## Beschreibung

Die Erfindung betrifft ein Verfahren und ein System zum Identitätsabgleich von übertragenen Daten innerhalb eines Publish-Subscribe basierten Kommunikationsnetzes sowie ein zugehöriges Verfahren und ein zugehöriges Computerprogrammprodukt.

Dezentral organisierte IoT-Systeme (Iot = Internet of Things), in denen bevorzugt (teil)autonome, lose gekoppelte Systemkomponenten bzw. -teilnehmer über ein datenzentrisches - bevorzugt ein Publish/Subscribe-Kommunikationsverfahren Nachrichten/Daten austauschen. Ein solcher Publikations- /Abonnementdienst (Public/Subscribe Service) wird beispielsweise über den Standard MQTT (MQ Telemetry Transport oder Message Queue Telemetry Transport, siehe http://mqtt.org/) oder DDS (Data Distribution Service; siehe https://www.dds-foundation.org/) bereitgestellt.

Beim Publish-Subscribe-Verfahren sendet der Publisher (Data Provider; Server) seine Nachricht und die darin enthaltenen Daten ins Netzwerk und an eine festgelegte Teilnehmergruppe. Der oder die Subscriber (Data Consumer; Client) können die Nachricht aus dem Netzwerk abgreifen, ohne eine dedizierte Verbindung zum Publisher aufzubauen. Im Folgenden werden Komponenten bzw. Geräte, die in einem Kommunikationsnetzwerk Daten nach dem Publish-Subscribe-Verfahren zur Verfügung stellen, als Publisher bzw. Datenbereitungstellungskomponente und entsprechend Geräte, die in einem Kommunikationsnetzwerk Daten nach dem Publish-Subscribe-Verfahren empfangen oder zumindest empfangen können, als Subscriber bzw. Datenkonsumkomponenten bezeichnet.

Speziell bei den Publishern kann es sich um IoT-Geräte (Internet of Things) handeln, also zum Beispiel Sensoren im Feld eines automatisierten technischen Prozesses oder dergleichen. Beispielsweise können drei Sensoren A, B, C auf einem Topic mit der Bezeichnung "temperature" kontinuierlich ihre Sensorwerte in Form von Temperaturwerten publizieren. Z.B. publiziert Sensor A auf "temperature/A", der Sensor B auf "temperature/B" und der Sensor C auf "temperature/C". Zwei Datenkonsumkomponenten E, F abonnieren das Topic "temperature". In diesem System würden die Datenkonsumkomponenten E, F alle Sensorwerte als Nutzinformation, die auf dem Topic publiziert werden, erhalten, ohne dabei die Sensoren A, B, C kennen zu müssen. Fällt ein Sensor, z.B. der Sensor A, aus, arbeitet das Netzwerk weiter, ohne dass Konfigurationsanpassungen vorgenommen werden müssen. Kommt ein weiterer Sensor D hinzu, gilt dasselbe ohne erforderliche Anpassungen der Konfiguration.

Ein weiteres typisches (technisches) System im industriellen Umfeld sind miteinander vernetzte autonome Agenten, insbesondere Roboter, die als Datenkomponenten im System kollaborativ zusammenarbeiten, um Arbeitsaufgaben ad hoc, dezentral und effizient durchführen zu können. Um Daten in einem solchen System auszutauschen, muss jeder einzelne Systemteilnehmer in der Empfängerrolle explizit Abonnements einrichten, um darauf Nutzdaten/-information zu empfangen, und in der Senderrolle Nutzdaten/-information auf eingerichtete Abonnements publizieren.

Es gibt Metainformationen in den Daten, die im Header (Kopfzeile) einer zu übertragenden Nachricht stehen, welche sich auf die zu übertragende Nutzinformation beziehen. Solche Nutzinformation bezogene Metainformation umfassen in der Regel Informationen zum Empfänger. Da im oben erläuterten Beispiel, der Empfänger nicht direkt über eine Empfängeradresse, sondern über den abonnierten Nachrichten-/Kommunikationskanal erreicht wird, stellt das oben genannte Topic eine solche Nutzinformation bezogene Metainformation dar. Metainformationen, die sich direkt und ausschließlich auf die übertragenen Nutzinformation(en) einer Nachricht beziehen, können z.B. die Angabe des Kodierungs- bzw. Kompressionsverfahrens der Nutzinformation(en) sein, damit diese auf der Empfängerseite wieder dekodiert werden können.

Zugang zu einem solchen Kommunikationssystem erfolgt in der Regel durch einen Authentifizierungsmechanismus (z.B. Zertifikat basiert, oder Nutzername/Passwort basiert) gegenüber einer Authentifizierungskomponente (z.B. einem Broker in einem vermittlerbehafteten Publish/Subscribe Kommunikationssystem) .

Das Problem in einem solchen Kommunikationssystem liegt in der eindeutigen Zuordenbarkeit jeder Nachricht auf den Sender, hier auf die Datenbereitstellungskomponente, das die Authentifizierung allein nicht lösen kann, da sich jeder Systemteilnehmer im System authentifiziert und dann je nach seiner Rolle Informationen publizieren oder abonnieren kann. Es findet keine weitere Überprüfung der Nachrichten während der Kommunikation statt. Dies ist besonders kritisch, wenn man offene Systeme z.B. im Sinne eines Zero-Trust-Networks realisieren möchte - oder es per Definition keine Authentifizierung gibt, weil man z.B. von einer physikalischen Abgrenzung der Kommunikation oder einer kompletten dezentralen Kommunikation ausgeht (wie z.B. in einem vermittlerlosen Publish/Subscribe System).

Ein möglicher Lösungsansatz des Problems ist, dass der Sender die Nachricht mit einem privaten (private) Zertifikat signiert und zusätzlich die Signatur sendet. Der Empfänger, hier die Datenkonsumkomponente, kann die Nachricht anhand eines öffentlichen (public) Zertifikats des Senders identifizieren.

Diese Signatur von Nachrichten über z.B. Public/Private Schlüsselpaare ist rechentechnisch aufwendig, da sowohl bei jeder Signatur Berechnung als auch bei der Überprüfung z.B. Hashfunktionen berechnet werden müssen. Zusätzlich muss eine komplexe Zertifikatsinfrastruktur verwaltet werden, um Zertifikate validieren zu können (z.B. auf eine Gültigkeitsdauer). Ist diese (komplett oder temporär) nicht erreichbar, ist auf Nachrichtenebene keine Identitätsabgleich mehr durchführbar.

Die Aufgabe der Erfindung besteht darin, eine/ein gegenüber des eingangs genannten Standes der Technik verbessertes Verfahren bzw. System/Vorrichtung anzugeben.

Diese Aufgabe wird durch die unabhängigen Ansprüche gelöst. Vorteilhafte Weiterbildungen sind Gegenstand der abhängigen Ansprüche.

Die Erfindung beansprucht ein computer-implementiertes Verfahren zum Identitätsabgleich von übertragenen Daten innerhalb eines Publish-Subscribe basierten Kommunikationsnetzes von mindestens einer Datenbereitstellungskomponente (z.B. 1. Agent) zu mindestens einer Datenkonsumkomponente (z.B. 2. Agent) des Kommunikationsnetzwerkes, wobei die genannten Datenkomponenten zumindest einen Teil eines mehrere Datenkomponenten umfassenden Systems bilden, aufweisend folgende Schritte:
- Bereitstellen wenigstens eines systemweiten (gemeinsamen) Geheimnisses sowie einer Zuweisungsvorschrift bzw. Abbildungsvorschrift an alle im System authentifizierten und gegebenenfalls autorisierten Datenkomponenten, mit Hilfe derer für jede Datenkomponente des Systems eine die Datenkomponente identifizierende Identifikationsinformation ableitbar ist,
- Bereitstellen von zu übertragenden Daten für eine ein Abonnement begründende Kommunikation zwischen den genannten Datenkomponenten, wobei die Daten zumindest eine von der Datenbereitstellungskomponente erzeugte Identifikationsinformation umfassen, welche aus einem der wenigstens einen systemweiten Geheimnisse und der Zuweisungsvorschrift abgeleitet wird und damit die Datenbereitstellungskomponente identifiziert,
- Übertragen der bereitgestellten Daten an die mindestens eine Datenkonsumkomponente, welche nach deren Empfang die erzeugte und übertragende Identifikationsinformations mit einer entsprechenden abgeleiteten Identifikationsinformation abgleicht, welche die Datenkonsumkomponente aus dem bereitgestellten systemweiten Geheimnis und der bereitgestellten Zuweisungsvorschrift ableitet,
- Einleiten einer der Übertragung entgegenwirkbaren Maßnahme, wenn das Abgleichergebnis aus einem vorgebbaren Rahmen einer zulässigen Abweichung fällt.

Mit anderen Worten ausgedrückt, die beiden abgeglichenen Identifikationsinformationen sind nicht identisch bzw. weichen voneinander ab.

Die Datenbereitstellungskomponente kann auch die Rolle einer Datenkonsumkomponente und die Datenkonsumkomponente kann auch die Rolle der Datenbereitstellungskomponente einnehmen.

Unter einer ein Abonnement begründenden Kommunikation wird eine Kommunikation verstanden, mittels welcher das Abonnement zwischen Datenbereitstellungskomponente und Datenkonsumkomponente vereinbart wird.

Die erzeugte Identifikationsinformation ist vorzugsweise geheim. Sie kann eine Datenkomponente bezogene Identifikationsinformation sein. Sie kann in die Daten als Metainformation eingebettet sein/werden. Dabei kann das Verfahren aus der Patentanmeldung "Verfahren zur Übertragung von Daten innerhalb eines Publish-Subscribe basierten Kommunikationsnetzes" mit gleichem Zeitrang verwendet werden, bei dem die Metainformation im Gegensatz zu den eingangs erwähnten Nutzinformation bezogenen Metainformationen von Nutzinformationen der ein Abonnement begründenden Kommunikation unabhängig ist/sind und somit quasi beiläufig über die vorhandenen Abonnementkanäle verteilt werden.

Die erzeugte Identifikationsinformation dient der Sicherheit des Gesamtsystems. Sie umfasst eine herkunftsidentifizierende, datenquelle-identifizierende bzw. senderbezogene Information wie z.B. Signatur- oder Wasserzeichendaten, welche eine kontinuierliche, beiläufige Validierung der zu übertragenen Daten und/oder Nutzinformationen oder deren Ursprung beim Empfänger ermöglicht bzw. ermöglichen. Sie kann quasi als eine Art Beweis verstanden werden, dass der Sender, hier die Datenbereitstellungskomponente, die Geheimnisse, d.h. das genannte systemweites Geheimnis und davon abgeleitete Nachrichten- und/oder Empfänger-spezifische Identifikationsinformationen bzw. Geheimnisse kennt.

Das systemweite Geheimnis und die erzeugte Identifikationsinformation kann ein (zuvor generiertes) Einmalpasswort, repräsentieren.

In die Daten kann zusätzlich ein Sequenzzähler als Metainformation eingebettet sein/werden, mit dessen Hilfe die mindestens eine Datenkonsumkomponenten die Vollständigkeit einer Sequenz von übertragenen Daten und/oder Nutzinformationen überprüfen kann.

Beansprucht wird ferner ein System zum Identitätsabgleich von übertragenen Daten innerhalb eines Publish-Subscribe basierten Kommunikationsnetzes von mindestens einer Datenbereitstellungskomponente zu mindestens einer Datenkonsumkomponente des Kommunikationsnetzwerkes, wobei das System die genannten Datenkomponenten umfasst und dazu ausgelegt ist, folgende Schritte auszuführen:
- Bereitstellen wenigstens eines systemweiten Geheimnisses sowie einer Zuweisungsvorschrift an alle im System authentifizierten und gegebenenfalls autorisierten Datenkomponenten, mit Hilfe derer für jede Datenkomponente des Systems eine die Datenkomponente identifizierende Identifikationsinformation ableitbar ist,
- Bereitstellen von zu übertragenden Daten für eine ein Abonnement begründende Kommunikation zwischen den genannten Datenkomponenten, wobei die Daten zumindest eine von der Datenbereitstellungskomponente erzeugte Identifikationsinformation umfasst, welche aus einem der wenigstens einen systemweiten Geheimnisse und der Zuweisungsvorschrift abgeleitet wird und damit die Datenbereitstellungskomponente identifiziert,

- Übertragen der bereitgestellten Daten an die mindestens eine Datenkonsumkomponente, welche nach deren Empfang die erzeugte und übertragende Identifikationsinformation mit einer entsprechend abgeleiteten Identifikationsinformation abgleichen kann, welche die Datenkonsumkomponente aus dem bereitgestellten systemweiten Geheimnis und der bereitgestellten Zuweisungsvorschrift ableiten kann,
- Einleiten einer der Übertragung entgegenwirkbaren Maßnahme, wenn das Abgleichergebnis aus einem vorgebbaren Rahmen einer zulässigen Abweichung fällt.

Das System kann mit Hilfe zumindest eines im System angeordneten oder an das System angeschlossenen Prozessor die erwähnten (Verfahrens-)schritte ausführen.

Die oben genannten Verfahrensschritte können computerimplementiert sein. Die Module bzw. Einheiten bzw. die Vorrichtung, die dazu eingerichtet sind, solche Verfahrensschritte auszuführen, können hardware-, firmware- und/oder softwaremäßig implementiert sein und jeweils für sich einen Prozessor aufweisen oder mit einem übergeordneten Prozessor kommunizieren.

Ein weiterer Aspekt der Erfindung ist ein Computerprogramm(-produkt) mit Programmcodemitteln zur Durchführung des Verfahrens nach einem der oben erwähnten Ausführungsformen, wenn es in einem System der oben genannten Art bzw. verteilt abläuft oder auf einem computerlesbaren Speichermedium gespeichert ist.

Das Computerprogramm bzw. -produkt kann auf einem computerlesbaren Speichermedium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Vorrichtung oder in deren Mitteln integriert sein.

Das oben genannte System bzw. Vorrichtung sowie das Computerprogramm(-produkt) können analog zum oben genannten Verfahren und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.

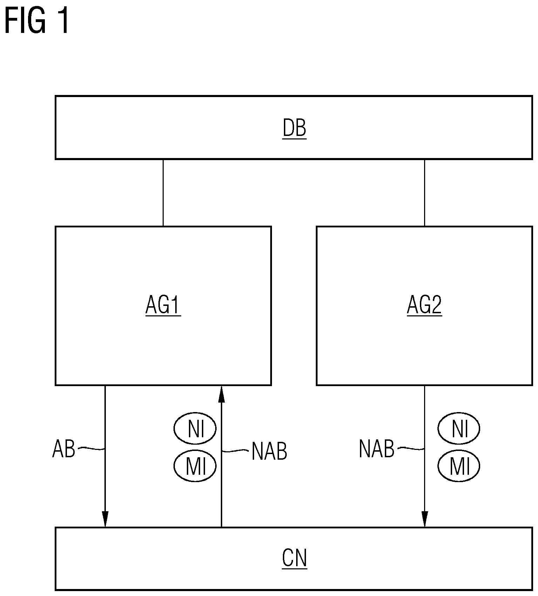

Figur 1 zeigt beispielhaft ein System, insbesondere ein Multiagentensystem, bei dem das erfindungsgemäße Verfahren angewendet werden kann,
Figur 2 zeigt ein Beispiel für eine Generierung von One-Time Identifizierungsmustern (Sub-OTPs) systemspezifisch für jede Nachricht.

Über ein Kommunikationsnetzwerk CN, das als lose gekoppeltes Kommunikationssystem mit einem Publikations- /Abonnementdienst, abgekürzt PUBSUB, realisiert ist, sind zwei oder mehrere Agenten AG1, AG2 im System verbunden. Jeder Agent kann Abonnements AB einrichten und/oder Nachrichten NAB auf (i.d.R. von anderen Agenten) eingerichtete Abonnements AB publizieren. In einer Nachricht NAB werden die Daten von einer Datenbereitstellungskomponente z.B. AG2 zu einer Datenkonsumkomponenten z.B. AG1 übertragen. In der Nachricht NAB wird zum einen die eigentliche Nutzinformation NI transportiert. Zum andere kann ein Agent aber auch davon unabhängige Metainformation(en) MI beifügen. Somit können solche Metainformationen auf den bestehenden Nutzinformation-spezifischen Abonnements übertragen werden.

Dazu werden diese Metainformationen in allen auf Nutzinformation-Abonnements publizierten Nachrichten fallweise, d.h. je nach Bedarf, beiläufig als Headerinformation mitübertragen.

Die Kodierung der Metainformationen zur Übertragung als Headerdaten einer Nachricht ist durch das verwendete Publish/Subscribe-Kommunikationsverfahren vorgegeben, beispielsweise als Binärkodierung oder als UTF-8 kodierten Zeichenkette.

Es ist auch möglich, dass für solche Metainformationen, welche sich nicht direkt auf die eigentlichen Nutzdaten/- informationen einer Nachricht beziehen, zusätzliche Abonnements eingerichtet werden, verwaltet und bedient werden und so über die zusätzlichen Abonnementkanäle übertragen werden.

Um eine Identifizierung, d.h. eindeutige, sichere und performante Zuordnung jeder einzelnen Nachricht zum Sender bzw. Datenbereitstellungskomponente z.B. AG2 zu gewährleisten, wird eine von der Datenbereitstellungskomponente erzeugte Identifikationsinformation, vorzugsweise ein Geheimnis, beispielsweise als eine Art "digitales Wasserzeichen" in jede Nachricht eingefügt und dieses mit der oben beschriebenen Verbreitung von Metainformationen im Publish/Subscribe basierten System an die anderen Systemteilnehmer übermittelt. Dieses Vorgehen ermöglicht eine hoch-performante Generierung einer Identifikationsinformation bzw. eines einmaligen (One-Time), digitalen Wasserzeichens und die lokale Validierung derer/dessen auf Seiten der Datenkonsumkomponente.

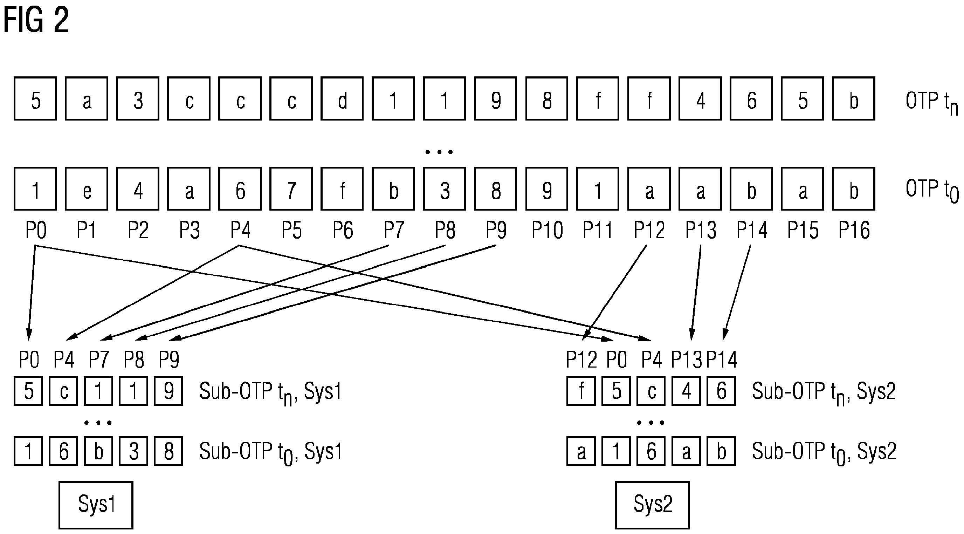

In einem ersten Schritt wird wenigstens ein systemweites Geheimnis sowie eine Zuweisungsvorschrift bzw. Abbildungsvorschrift an alle im System authentifizierten und gegebenenfalls autorisierten Datenkomponenten z.B. AG1, AG2, bereitgestellt. Mit Hilfe derer ist für jede Datenkomponente des Systems ein auf die Datenkomponente beziehbare Identifikationsinformation bzw. Geheimnis ableitbar. Im Beispiel generiert ein Generatorsystem ein Einmalpasswort (OTP = One time password, siehe https://en.wikipedia.org/wiki/One-time_password), bevorzugt OTP fixer Länge, z.B. basierend auf Zeit t₀ bis tn, Secret, Random Seed oder andere mathematische Algorithmen und verteilt es auf alle authentifizierten und gegebenenfalls autorisierten Systemteilnehmern Sys1, Sys2, die die oben genannten Agenten AG1 und AG2 repräsentieren können, und synchronisiert es. Zusätzlich wird allen Systemteilnehmern eine Abbildungsvorschrift/-muster und/oder Algorithmus zugewiesen, nach dem eine die Datenkomponente identifizierende Identifikationsinformation abgeleitet wird. Es wird im Beispiel aus dem OTP eine systemeigene Identifikation selektiert und zusammensetzt (siehe Figur 2). Es entsteht somit ein systemspezifisches Einmalpasswort, das mit Sub-OTP bezeichnet wird. Diese Abbildungsmuster und/oder Algorithmen von systemweiten OTP auf systemspezifische Sub-OTP werden im nächsten Schritt allen authentifizierten Systemteilnehmern bekannt gemacht und ggf. lokal z.B. in einer sicheren Datenbank DB oder einem Secure Element gespeichert. Bei jeder Nachricht, welche ein Systemteilnehmer dann während des Systembetriebs über seine Public-Subscribe Kommunikation verschickt, fügt es sein aktuelles Sub-OTP als eindeutigen pseudo-zufälligen Identifier z.B. als beiläufige Metainformation
- wie oben erläutert - hinzu. Jedes OTP umfasst mehrere pseudo-zufällige Zeichen z.B. P₀ bis P16. Es entsteht letztendlich ein nachrichten- und teilnehmerspezifisches Geheimnis, im Beispiel mit Zeichen P0,P4,P7,P8, P9 bzw. P12,P0, P4, P13, P14.

Alle anderen authentifizierten Systemteilnehmer, welche entsprechende Nachrichten abonniert haben, empfangen diese Nachricht mit dem Sub-OTP. Jedes übertragene Sub-OTP kann dann genutzt werden, damit ein Datenkonsumkomponente z.B. AG1 abgleichen kann, ob die Nachricht von einem authentifizierten und gegebenenfalls autorisierten Systemteilnehmer z.B. AG2 kommt oder nicht. Dies kann durch den Abgleich des synchronisierten verteilten systemweiten OTP zusammen mit den verteilten Abbildungsvorschriften/-mustern, die gegebenenfalls in einer gemeinsamen Datenbank abgelegt sind/werden, und dem Sub-OTP in den Metainformationen der Nachrichten geschehen. Durch dieses Verfahren wird es möglich, jede Nachricht individuell auf ihre Herkunft zu überprüfen.

Wenn der oben genannte Abgleich zu einem Ergebnis führt, der aus einem vorgebbaren Rahmen einer zulässigen Abweichung fällt, können entsprechende Gegenmaßnahmen eingeleitet werden.

Einzelne Systemteilnehmer, die nicht mehr autorisiert sind, Nachrichten zu schicken, können in Form einer Blacklist in der Datenbank DB berücksichtigt werden. Kommt dann eine Nachricht von einem Systemteilnehmer, welcher nicht mehr autorisiert ist, können die anderen Systemteilnehmer den Ursprung der Nachricht detektieren und eine passende Gegenmaßnahme einleiten. Z.B. diese Nachricht wird entsprechend verworfen. Im vorteilhaften Fall wird aber auch mit jedem Systemteilnehmer, der nicht mehr berechtigt ist, auch zwischen den verbleibenden Systemteilnehmern eine neue Generatorfunktion für OTPs gestartet und die Abbildungsvorschriften in der Datenbank aktualisiert.

Neue Abbildungsvorschriften/-muster für neue Systeme können über verschlüsselte und herkunftsidentifizierte Nachrichten verteilt werden. Ebenso kann der Transfer von Generatorfunktionen und zur/von der Datenbank über solche verschlüsselten Nachrichten geschehen.

Um zusätzlich die Unveränderlichkeit/Unverfälschtheit der Nachrichten sicherzustellen, kann das Verfahren mit Signaturverfahren für nachrichtenbasierte und/oder Public-Subscribe Systeme kombiniert werden.

Die Abbildungsmuster können auf unterschiedliche Art und Weise realisiert werden: Die Abbildungsmuster können beispielsweise statische Abbildungen sein, sie können durch Abbildungsalgorithmen realisiert werden, auch kombiniert mit Sekundärinformationen (z.B. unterschiedliche Muster für unterschiedliche Nachrichtenabonnements bzw. Nutzinformationstypen von Nachrichten). Dies kann sogar zu unterschiedlichen Längen der Sub-OTPs führen.

Eine weitere vorteilhafte Ausprägung des Verfahrens besteht darin, zusammen mit dem Sub-OTP in die Daten einen vom Sender verwalteten und generierten Sequenzzähler einzubetten, beispielsweise in Form einer ganzen Zahl, welche vom Sender für jede von ihm verschickte Nachricht auf einem spezifischen Abonnement zum Beispiel um eins erhöht wird. Der Empfänger einer solchen Nachricht kann dann im Nachhinein durch Abgleich mit einer entsprechenden Variablen, die den letzten Zählerstand speichert, feststellen, ob eine sequenzielle Folge von übertragenen Daten (publizierten Nachrichten) eines spezifischen Senders auf einem spezifischen Abonnement vollständig übermittelt wurden, bzw. ob einzelne Nachrichten im Kommunikationsnetzwerk verloren gingen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe/-schritte kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System (Cloud) abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor bzw. eine Recheneinheit, der Teil eines Systems, eines Geräts, einer (Steuerungs)vorrichtung bzw. -anordnung bzw. -einheit und/oder eines Computers und/oder eines oder mehrerer Dienste in einer Rechnerwolke (Cloud) eines Diensterbringers sein kann, mindestens einen Verfahrensschritt des Verfahrens ausführt.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

## Patentansprüche

1. Computer-implementiertes Verfahren zum Identitätsabgleich von übertragenen Daten innerhalb eines Publish-Subscribe basierten Kommunikationsnetzes (CN) von mindestens einer Datenbereitstellungskomponente (AG2) zu mindestens einer Datenkonsumkomponente (AG1) des Kommunikationsnetzwerkes, wobei die genannten Datenkomponenten zumindest einen Teil eines mehrere Datenkomponenten umfassenden System bilden, aufweisend folgende Schritte:
- Bereitstellen wenigstens eines systemweiten Geheimnisses (OTP) sowie einer Zuweisungsvorschrift an alle im System authentifizierten und gegebenenfalls autorisierten Datenkomponenten (Sys1, Sys2), mit Hilfe derer für jede Datenkomponente des Systems eine die Datenkomponente identifizierende Identifikationsinformation (Sub-OTP) ableitbar ist,
- Bereitstellen von zu übertragenden Daten für eine ein Abonnement begründende Kommunikation zwischen den genannten Datenkomponenten, wobei die Daten zumindest eine von der Datenbereitstellungskomponente erzeugte Identifikationsinformation umfasst, welche aus einem der wenigstens einen systemweiten Geheimnisse und der Zuweisungsvorschrift abgeleitet wird und damit die Datenbereitstellungskomponente identifiziert,
- Übertragen der bereitgestellten Daten an die mindestens eine Datenkonsumkomponente, welche nach deren Empfang die erzeugte und übertragende Identifikationsinformation mit einer entsprechend abgeleiteten Identifikationsinformation abgleicht, welche die Datenkonsumkomponente aus dem bereitgestellten systemweiten Geheimnis und der bereitgestellten Zuweisungsvorschrift ableitet,
- Einleiten einer der Übertragung entgegenwirkbaren Maßnahme, wenn das Abgleichergebnis aus einem vorgebbaren Rahmen einer zulässigen Abweichung fällt.

2. Verfahren nach dem vorhergehenden Anspruch, **dadurch gekennzeichnet, dass** die erzeugte Identifikationsinformation in die Daten als Metainformation eingebettet ist/wird, die von Nutzinformationen der ein Abonnement begründenden Kommunikation unabhängig ist.

3. Verfahren nach einem der vorhergehenden Ansprüche, **dadurch gekennzeichnet, dass** in die Daten zusätzlich ein Sequenzzähler als Metainformation eingebettet ist/wird, mit dessen Hilfe die mindestens eine Datenkonsumkomponenten die Vollständigkeit einer Sequenz von übertragenen Daten überprüfen kann.

4. Verfahren nach einem der vorhergehenden Ansprüche, **dadurch gekennzeichnet, dass** die Identifikationsinformation ein Einmalpasswort repräsentiert.

5. System zum Identitätsabgleich von übertragenen Daten innerhalb eines Publish-Subscribe basierten Kommunikationsnetzes von mindestens einer Datenbereitstellungskomponente zu mindestens einer Datenkonsumkomponente des Kommunikationsnetzwerkes, wobei das System die genannten Datenkomponenten umfasst und dazu ausgelegt ist, folgende Schritte auszuführen:
- Bereitstellen wenigstens eines systemweiten Geheimnisses sowie einer Zuweisungsvorschrift an alle im System authentifizierten und gegebenenfalls autorisierten Datenkomponenten, mit Hilfe derer für jede Datenkomponente des Systems eine die Datenkomponente identifizierende Identifikationsinformation ableitbar ist,
- Bereitstellen von zu übertragenden Daten für eine ein Abonnement begründende Kommunikation zwischen den genannten Datenkomponenten, wobei die Daten zumindest eine von der Datenbereitstellungskomponente erzeugte Identifikationsinformation umfasst, welche aus einem der wenigstens einen systemweiten Geheimnisse und der Zuweisungsvorschrift abgeleitet wird und damit die Datenbereitstellungskomponente identifiziert,
- Übertragen der bereitgestellten Daten an die mindestens eine Datenkonsumkomponente, welche nach deren Empfang die erzeugte und übertragende Identifikationsinformation mit einer entsprechend abgeleiteten Identifikationsinformation abgleichen kann, welche die Datenkonsumkomponente aus dem bereitgestellten systemweiten Geheimnis und der bereitgestellten Zuweisungsvorschrift ableiten kann,
- Einleiten einer der Übertragung entgegenwirkbaren Maßnahme, wenn das Abgleichergebnis aus einem vorgebbaren Rahmen einer zulässigen Abweichung fällt.

6. Computerprogrammprodukt umfassend einen durch einen Prozessor ausführbaren Programmkode oder mehrere durch mehrere Prozessoren ausführbare und zusammenwirkende Programmkodemodule, welches oder welche Befehle aufweisen, die die Ausführung des Verfahrens nach einem der vorhergehenden Verfahrensansprüche auf dem System nach Anspruch 5 veranlassen.

7. Computerlesbarer Datenträger oder Datenträgersignal umfassend das Computerprogrammprodukt nach dem vorhergehenden Anspruch.
